# NOUVEAU FASCICULE DE BREVET EUROPEEN

(11) **EP 0 287 420 B2**
(45) Date de publication et mention de la décision concernant l'opposition: **19.04.1995**
(45) Mention de la délivrance du brevet: 24.10.1990
(21) Numéro de dépôt: 88400753.5
(22) Date de dépôt: 29.03.1988
(51) Int. Cl.: F23D 14/54, B23K 7/00

(54) **Procédé et buse d'oxycoupage**
Verfahren und Düse zum Sauerstoffschneiden
Process and nozzle for oxy-cutting

(30) Priorité: 01.04.1987 FR 8704523
(43) Date de publication de la demande: 19.10.1988
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Arnout, Michel, F-95130 Franconville (FR); Dufour, Eric, F-95130 Franconville (FR); Le Goff, Roger, F-78700 Conflans-Sainte-Honorine (FR)
(74) Mandataire: Le Moenner, Gabriel

(56) Documents cités:
- BE-A- 900 314
- DE-A- 1 629 965
- DE-A- 1 776 241
- DE-A- 1 908 748
- DE-A- 2 151 365
- DE-A- 2 251 632
- DE-U- 7 322 494
- US-A- 2 094 641
- US-A- 2 302 734
- US-A- 2 501 724

## Description

La présente invention concerne les procédés d'oxycoupage de pièces métalliques de forte épaisseur suivant une ligne de coupe, comprenant les étapes de préchauffer la pièce à couper en faisant agir une pluralité de flammes de chauffe à extension sensiblement transversale par rapport à la ligne de coupe et alimentées en mélange oxycombustible, et d'éffectuer la coupe en faisant agir successivement, selon la ligne de coupe, au moins deux jets d'oxygène de coupe successifs, un premier jet d'oxygène de coupe assurant l'ébauche d'une saignée brute et un second jet d'oxygène de coupe assurant par la suite la finition de la coupe.

Un procédé de ce type est décrit dans le document DE-A-17.76.241.

Dans une opération d'oxycoupage sur forte épaisseur, les flammes de chauffe doivent remplir quatre fonctions essentielles, à savoir :
- chauffer efficacement le bord de la brame jusqu'à la température d'amorçage de la coupe ;
- fournir, à la surface de la pièce, la chaleur nécessaire au maintien du processus de coupage ;
- assurer au jet de coupe les propriétés d'écoulement satisfaisantes ;
- chauffer le plus loin possible à l'intérieur de la saignée pour faciliter l'écoulement des scories.

Le jet d'oxygène de coupe doit être d'un débit suffisant pour assurer la combustion du fer et, de surcroît, très "rigide" pour éviter les effets de retard et évacuer efficacement les scories, c'est-à-dire transformer toute l'énergie potentielle de pression en énergie cinétique de vitesse d'écoulement.

Actuellement, la technologie la plus couramment utilisée dans la conception des buses de coupe pour fortes épaisseurs est la double couronne de chauffe concentrique à un jet d'oxygène central avec une couronne extérieure à flamme très oxydante permettant de chauffer le dessus de la brame à oxycouper et une couronne de chauffe, située entre cette couronne extérieure et le jet de coupe central, à flamme très carburante pour obtenir un long panache autour du jet de coupe qui, entraîné par ce dernier, rentre dans la saignée de coupe et aide à la chauffe du milieu et fond de saignée.

Pour le jet d'oxygène, une tuyère dite de Laval est le plus couramment utilisée pour obtenir une grande vitesse de sortie sans éclatement du jet.

Toutefois, l'utilisation d'un jet d'oxygène à très grande vitesse trouve ses limites, car il peut contribuer à provoquer une insuffisance de chauffe en milieu de saignée, qui entraîne, surtout en oxycoupage à froid, des affouillements préjudiciables à la qualité de coupe.

On a proposé des buses de coupe à deux jets d'oxygène pour l'oxycoupage d'épaisseurs courantes, mais avec des jets désaxés.

Le document EP-A-0.172.800 décrit un perfectionnement aux procédés d'oxycoupage, qui met en oeuvre un jet d'oxygène d'appoint permettant d'assurer une refusion en bas de saignée pour faciliter le détachement des bavures après coupe.

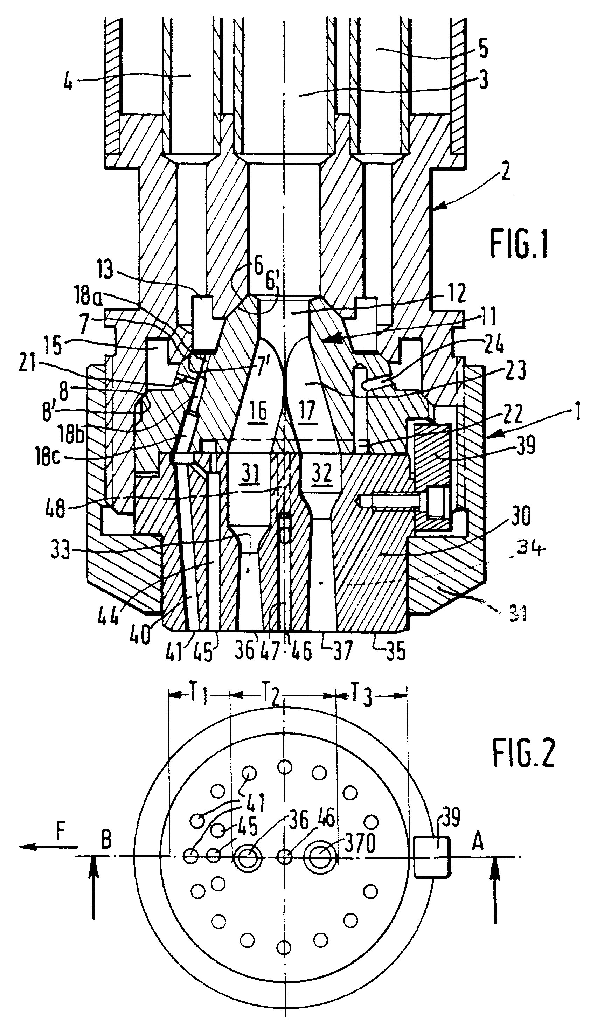

Dans le document DE-A-17.76.241 sus-mentionné, on prévoit deux (figure 1) jets de coupe excentrés par rapport à la ligne de coupe, alors qu'à la figure 2, on prévoit un jet de coupe central à l'avant de deux jets de coupe excentrés complétant la saignée. Ce type de coupe s'est avéré difficile à mettre en oeuvre avec une grande cadence de coupe, notamment parce que la saignée de coupe s'en trouve extrêmement élargie.

Le but de la présente invention vise une augmentation de la vitesse d'oxycoupage qui est un des éléments déterminants pour accroître la productivité en sidérurgie, alors que les technologies connues, même après optimisation avec des gaz plus performants, ne permettent plus d'augmenter ce facteur.

Plus particulièrement, l'invention vise une autre conception de buse permettant d'atteindre des vitesses de coupe supérieures de 20 % par rapport aux matériels actuellement connus.

Selon l'invention, on éjecte entre les premier et second jets d'oxygène de coupe et simultanément avec ceux-ci, au moins un jet de combustible pur à un débit déterminé pour former une flamme intermédiaire de réchauffe profonde de la saignée brute.

Le premier jet d'oxygène a ainsi pour fonction de former la saignée sans se préoccuper de la qualité de coupe. La flamme de chauffe intermédiaire, entraînée, aspirée par les deux jets d'oxygène parallèles entre eux, pénètre dans la saignée et contribue efficacement à la chauffe en milieu et fond de saignée. Le deuxième jet d'oxygène de coupe empêche que le premier jet d'oxygène de coupe ne prenne un retard trop important et assure à la coupe une qualité de surface particulièrement lisse. En pratique, la flamme intermédiaire de réchauffe profonde est produite par un courant de combustible, ou d'oxycombustible, à faible proportion d'oxygène, qui pénètre complètement dans la saignée ébauchée par le premier jet d'oxygène de coupe et aussure ainsi un chauffage très efficace en milieu et en fond de saignée. Cet apport de combustible central joue un rôle déterminant pour la rapidité et la qualité de la coupe de tôles de fortes épaisseurs. A titre d'exemple, une telle flamme est obtenue avec du "CRYLENE" , avec un rapport de consommation d'oxygène de 0,5, de 1,5 pour le "TETRENE" , alors que les rapports habituels sont de 1,8 et 3,5, respectivement.

Le débit doit être de l'ordre de 1 à 2 m³/h. Un débit trop faible, inférieur à 1 m³/h, entraîne des chutes de performances.

La vitesse de sortie du combustible n'est pas très importante, car c'est l'application des jets d'oxygène (2,2 à 2,5 mach) qui l'entraîne en fond de saignée.

On interprète ce phénomène nouveau en ce que le combustible se mélange partiellement avec un peu d'oxygène en milieu et fond de saignée, ce qui contribue à une chauffe efficace, car une flamme "molle", c'est-à-dire une flammme sans ou avec très peu d'oxygène, est inopérante pour obtenir le résultat de l'invention.

Par nature, cette façon de faire ne peut être utilisée que pour des coupes droites ou des coupes à très grand rayon de courbure et nécessite par ailleurs une orientation de la buse et du chalumeau par rapport à l'axe de déplacement.

Des essais de mise en oeuvre ont permis d'augmenter la vitesse de coupe de plus de 20 % par rapport aux matériels les plus performants actuellement connus.

Des essais comparatifs réalisées avec des prototypes montrent l'importance décisive pour l'accroissement de la vitesse de coupe de l'apport de combustible entre les deux jets d'oxygène de coupe.

De préférence, on fait agir, après une préchauffe frontale importante et simultanément à l'action des jets de coupe et flamme intermédiaire, une pluralité supplémentaire de flammes de chauffe à double extension latérale de part et d'autre de la ligne de coupe.

L'invention concerne également une buse de coupe comprenant au moins deux conduits d'oxygène de coupe connectables à un premier circuit d'amenée d'oxygène et débouchant dans une partie centrale de la buse par au moins deux débouchés d'oxygène de coupe, un premier moyen de conduit distributeur de combustible connectable à un circuit d'amenée de combustible, un deuxième moyen de conduit distributeur d'oxygène de chauffe connectable à un deuxième circuit d'amenée d'oxygène, et au moins une série de conduits de mélange oxycombustible communiquant chacun avec des premier et deuxième moyens de conduits distributeurs et débouchant dans une partie périphérique de la buse par une série de débouchés de mélange oxycombustible, caractérisée en ce qu'elle comporte au moins un conduit de combustible pur communiquant seulement avec le premier moyen de conduit distributeur et débouchant dans la partie centrale de la buse par au moins un débouché de combustible situé entre deux débouchés successifs d'oxygène de coupe.

Avantageusement, la buse présente une densité de débouchés de conduits périphériques de chauffe qui est plus élevée au voisinage d'une extrémité de la droite d'alignement des débouchés des conduits d'oxygène de coupe.

De préférence, deux débouchés successifs d'oxygène de coupe sont séparés entre eux d'une distance comprise entre 8 et 20 mm.

Les caractéristiques et avantages de l'invention ressortiront d'ailleurs de la description qui suit, à titre d'exemple en référence aux dessins annexés, sur lesquels :
- la figure 1 est une vue en coupe axiale d'une buse selon l'invention ;
- la figure 2 est une vue frontale de la buse selon la figure 1 ;
- les figures 3 et 4 d'une part, 5 et 6 d'autre part, sont des vues analogues aux figures 1 et 2, de deux variantes de réalisation de l'invention.

En se référant aux figures 1 et 2, un dispositif d'oxycoupage comporte une buse 1 montée sur un corps de buse 2.

Le corps de buse 2 comprend différents conduits d'alimentation, à savoir :
- un conduit central d'oxygène de coupe 3, dont la pression relativement élevée est de l'ordre de 8 à 20 bar ;
- deux conduits d'oxygène de chauffe 4 et 5 disposés diamétralement de part et d'autre du conduit axial 3 ;
- dans une position décalée de 90° par rapport à l'axe de corps de buse 2 sont ménagés deux conduits (non représentés) de combustible de chauffe.

Le corps de buse 2 se présente à son extrémité libre avec une pluralité de faces tronconiques formant raccords 6, 7 et 8 contre lesquels viennent s'appuyer des faces coopérantes 6', 7' et 8' d'une tête de buse 11.

Les faces coopérantes 6 et 6' servent à assurer l'étanchéité entre le conduit axial d'oxygène de coupe dans le corps de buse 2 et une ébauche de conduit axial 12 dans la tête de buse 11.

Les faces d'étanchéité tronconiques 7 et 7', en coopération avec les faces d'étanchéité 6 et 6' servent à assurer l'étanchéité d'un conduit annulaire transversal 13 dans lesquels débouchent les deux conduits d'oxygène de chauffe 4 et 5.

Les faces d'étanchéité tronconiques 8 et 8' en coopération avec les faces d'étanchéité 7 et 7' servent à assurer l'étanchéité d'un conduit annulaire transversal 15 dans lequel débouchent les deux conduits de combustible, non représentés.

Dans la tête de buse 11, l'ébauche de conduit axial 12 se subdivise en deux conduits divergents 16 et 17.

Dans la tête de buse 11 sont ménagés d'une part une pluralité de conduits de mélange oxycombustible, dont un est représenté en 18 présentant une section à trois paliers d'accroissement de section d'amont en aval 18 a, 18 b, 18 c.

La section la plus faible 18 ª prend naissance dans le conduit annulaire d'oxygène de chauffe 13, alors que la section moyenne 18 b reçoit en outre par un conduit 21 du gaz combustible qui est aspiré dans le conduit 18 par l'effet de succion provenant de la détente de l'oxygène de chauffe du fait de l'accroissement de section, le tout de façon à obtenir une combustion normale complète du combustible.

La tête de buse 11 présente également sur sa face frontale une gorge annulaire qui, avec la buse proprement dite, forme un conduit annulaire de combustible 22 qui est raccordé par des conduits 23 et 24 à la couronne annulaire de gaz combustible 15.

La buse proprement dite 30 présente une face amont qui coopère à étanchéité grâce à l'action d'un écrou 31 avec une position radiale correcte grâce à la clavette 39 avec la face correspondante de la tête de buse 11. La buse proprement dite 30 présente dans un plan transversal deux conduits d'oxygène de coupe 31, 32 chacun présentant une forme en tuyère de Laval 33, 34, la tuyère 34 étant de section légèrement supérieure, à celle de la tuyère 33. Les deux conduits 31, 32 débouchent au travers de la face frontale 35 de la buse proprement dite 30 par deux débouchés circulaires 36, 37 dont les centres sont alignés sur un diamètre de la buse proprement dite 30.

Du coté de la périphérie de la buse sont aménagés une série presque circulaire de conduits 40 et qui débouchent en 41 au travers de la face frontale 35 de la buse proprement dite 30. Ces conduits 40 sont raccordés aux différents conduits de mélange combustible 18.

Au voisinage d'une partie de la périphérie de la buse, dans un des prolongements de l'axe diamétral qui relie les débouchés 36 et 37 des conduits d'oxygène de coupe 31 et 32 et entre les débouchés 36 et les débouchés 41 est ménagée une pluralité complémentaire de conduit de chauffe 44, qui s'étendent sur une partie restreinte d'un arc de cercle, et qui débouchent en 45.

Entre les débouchés 36 et 37 des conduits d'oxygène de coupe 31 et 32 apparaît un débouché 46 d'un conduit de combustible 47 qui est alimenté par la couronne de gaz combustible 22 à partir des conduits inclinés, dont on aperçoit un tracé en 48.

En fonctionnement, la buse dont la face frontale 35 est à une distance d'environ 10 cm de la face à couper, subit un déplacement relatif par rapport à la pièce à couper dans la direction et dans le sens diamétral A vers B (flèche F).

Ainsi, dans un premier temps, qui correspond au temps représenté en T₁ à la figure 2, la pièce à couper subit un échauffement qui est fourni essentiellement par le grand nombre de flammes qui débouchent en 41 et 45 et qui sont issues des conduits 40 et 44. On peut désigner cet ensemble de flammes comme étant un ensemble frontal de flammes de chauffe.

Dans la période T₂ qui lui fait suite et qui couvre le passage des jets d'oxygène de coupe issus des débouchés 36 et 37 des conduits d'oxygène de coupe 31 et 32 ainsi que la flamme carburante issue du conduit 47, on assiste à la succesion des opérations de coupe proprement dite :
- d'abord le jet d'oxygène de coupe issu du débouché 36 forme une saignée au travers de la pièce à couper, dont la qualité est très rudimentaire ;
- immédiatement après la formation de cette saignée brute, la flamme de chauffe carburante issue du débouché 46 du conduit 47 et qui est entrainé par les deux jets d'oxygène de coupe qui sont parallèles entre eux pénètrent dans la saignée brute et assurent une chauffe particulièrement efficace du milieu et du fond de la saignée.
- à la suite de cette chauffe intervient le second jet d'oxygène de coupe issu du débouché 37 du conduit 32 qui assure la finition de la saignée en conférant à la surface de cette saignée un aspect particulièrement lisse.

Pendant toute la durée T₂, des flammes de chauffe issues des débouchés 41 des conduits de chauffe assure le chauffage de la pièce latéralement aux jets d'oxygène de coupe.

Ainsi qu'il a été dit précédemment ce procédé de coupage permet l'obtention de vitesses de coupe particulièrement élevées ; ainsi par exemple dans le cas d'une brame froide ayant une épaisseur de 200 mm, la vitesse de coupe a pu atteindre 380 mm/minute dépassant ainsi d'au mon 20 % les vitesses maximales actuellement mises en oeuvre.

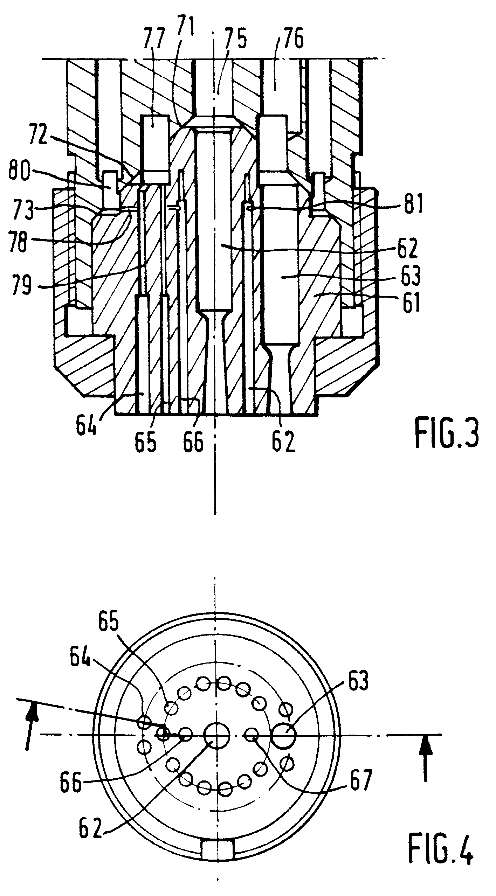

On se réfère maintenant au figures 3 et 4 qui représentent une variante de réalisation de l'invention. Ici la buse de coupe 61 est d'un seul tenant et comporte une pluralité de conduits tous longitudinaux, à savoir deux conduits d'oxygène de coupe 62 et 63 (le conduit 63 étant en fait alimenté par de l'oxygène de chauffe à une pression de l'ordre de 6 à 8 bars), une pluralité de conduits de flamme de chauffe 64, 65, 66, et entre les conduits d'oxygène de coupe 62 et 63 est ménagé le conduit à flamme carburant 67.

La buse présente des faces d'étanchéités 71, 72, 73 qui délimitent avec des faces correspondantes du corps de buse 61 des raccords étanches d'une part du conduit d'oxygène de coupe 62 avec un premier conduit d'alimentation d'oxygène de coupe 75, d'autre part du second conduit d'oxygène de coupe 63 avec un second conduit d'alimentation en oxygène de coupe 76, d'autre part l'alimentation des conduits de chauffe 64, 65 et 66 à partir d'une couronne d'oxygène de chauffe 77 alimentée par le second conduit d'oxygène de coupe 76 et par des conduits transversaux de combustible 78 et 79 à partir d'une couronne de combustible 80 , tandis que le conduit complémentaire de chauffe 67 est alimenté à partir du conduit transversal 81 au conduit annulaire de combustible 80.

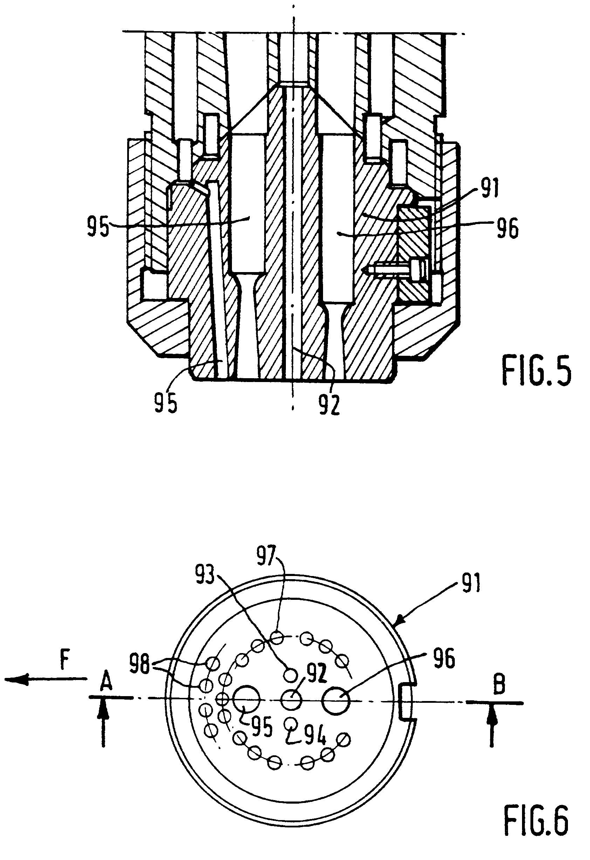

En se référant au figures 5 et 6, la buse mono-bloc 91 se caractérise par une alimentation séparée des deux jets d'oxygène de coupe et comporte ici un conduit axial pour un gaz 92 qui peut servir de vecteur à l'introduction d'un produit améliorant la coupe, alors que la chauffe profonde en saignée est assurée par deux conduits voisins 93 et 94. L'oxygène de coupe est vehiculé dans deux conduits 95, 96 de part et d'autre des conduits 92, 93 et 94. Les conduits de chauffe se présentent ici sous la forme d'une série presque circulaire de premier conduits de chauffe 97, qui est assistée par quelques conduits complémentaires 98 dans la zone frontale de la coupe selon A B (flèche F).

On constate aussi que dans certaines réalisations il est intéressant de prévoir une alimentation indépendante des jets d'oxygène de coupe, ce qui, grâce à des pressions differenciées d'oxygène, permet d'assurer un fonctionnement optimal.

L'invention s'applique à l'oxycoupage de tôles de fortes épaisseurs, de l'ordre de 150 mm à 400 mm ; au refendage de brames à froid et/ou à l'oxycoupage en sortie de coulée continue à chaud.

## Revendications

1. Procédé d'oxycoupage de pièces métalliques de forte épaisseur suivant une ligne de coupe (A-B), comprenant les étapes de préchauffer la pièce à couper en faisant agir une pluralité de flammes de chauffe à extension sensiblement transversale par rapport à la ligne de coupe et alimentées en mélange oxycombustible, et d'effectuer la coupe en faisant agir successivement, selon la ligne de coupe, au moins deux jets d'oxygène de coupe successifs, un premier jet d'oxygène de coupe assurant l'ébauche d'une saignée brute et un second jet d'oxygène de coupe assurant par la suite la finition de la coupe, caractérisé en ce qu'il comporte l'étape d'éjecter, entre les premiers et seconds jets d'oxygène de coupe et simultanément avec ceux-ci, au moins un jet de combustible pur à un débit déterminé pour former une flamme intermédiaire de réchauffe profonde de la saignée brute.

2. Procédé selon la revendication 1, caractérisé en ce que les jets d'oxygène de coupe sont alignés avec la ligne de coupe (A-B).

3. Procédé selon la revendication 2, caractérisé en ce que le jet de combustible est aligné avec les jets d'oxygène de coupe.

4. Procédé selon l'une des revendications 1 à 3, caractérisé en ce qu'il comprend l'étape de faire agir, simultanément à la coupe par les jets de coupe, une pluralité de flammes de chauffe, alimentées en mélange oxycombustible, disposées extérieurement par rapport aux jets d'oxygène de coupe, de part et d'autre de la ligne de coupe (A-B).

5. Procédé selon l'une des revendications 1 à 4, caractérisé en ce que le débit de jet de combustible est compris entre 1 et 2 m³/h.

6. Buse de coupe (1) comprenant au moins deux conduits d'oxygène de coupe (31, 32 ; 62, 63 ; 95, 96) connectables à un premier circuit d'amenée d'oxygène (3 ; 75, 76) et débouchant dans une partie centrale de la buse par au moins deux débouchés d'oxygène de coupe (36, 37 ; 62, 67), un premier moyen de conduit distributeur (15, 21, 24 ; 80, 78, 79) de combustible connectable à un circuit d'amenée de combustible, un deuxième moyen de conduit distributeur (13, 18a ; 77) d'oxygène de chauffe connectable à un deuxième circuit d'amenée d'oxygène (4, 5 ; 77), et au moins une série de conduits (40, 44 ; 64-66) de mélange oxycombustible communiquant chacun avec des premier et deuxième moyens de conduits distributeurs et débouchant dans une partie périphérique de la buse par une série de débouchés de mélange oxycombustible (41, 45 ; 97, 98), caractérisée en ce qu'elle comporte au moins un conduit de combustible pur (47, 67) communiquant seulement avec le premier moyen de conduit distributeur et débouchant dans la partie centrale de la buse par au moins un débouché de combustible (46 ; 93, 94) situé entre deux débouchés successifs (36, 37 ; 62, 67) d'oxygène de coupe.

7. Buse selon la revendication 6, caractérisée en ce que les débouchés d'oxygène de coupe (36, 37 ; 62, 67) sont alignés suivant un diamètre (A-B) de la buse (1).

8. Buse selon la revendication 7, caractérisée en ce que le débouché de combustible (46) est aligné sur ledit diamètre.

9. Buse selon l'une des revendications 6 à 8, caractérisée en ce que deux débouchés d'oxygène de coupe successifs (36, 37 ; 62, 63 ; 95, 96) sont distants entre eux de 8 à 20 mm.

10. Buse selon l'une des revendications 7 à 9, caractérisée en ce qu'elle présente une densité de débouchés de mélange oxycombustible (41, 45) qui est plus élevée au voisinage d'une extrémité (B) dudit diamètre de la buse.

## Claims

1. A method for the oxygen cutting of very thick metal parts along a cutting line (A-B), comprising the stages of preheating the part to be cut by causing the action of a plurality of heating flames, extending substantially transversely relative to the cutting line and fed with an oxy-fuel mixture, and to make the cut by causing the action in succession, along the cutting line, of at least two successive jets of cutting oxygen, a first jet of cutting oxygen starting off a rough kerf and a second jet of cutting oxygen then finishing the cut, characterised in that it comprises the stage of ejecting, between the first and second jets of cutting oxygen and simultaneously with these, at least one jet of pure fuel at a predetermined rate so as to form an intermediate flame for the deep reheating of the rough kerf.

2. A method according to Claim 1, characterised in that the jets of cutting oxygen are aligned with the cutting line (A-B).

3. A method according to Claim 2, characterised in that the jet of fuel is aligned with the jets of cutting oxygen.

4. A method according to one of Claims 1 to 3, characterised in that it comprises the stage of causing the action, simultaneously with the cutting by the cutting jets, of a plurality of heating flames, supplied with an oxy-fuel mixture, arranged externally with respect to the jets of cutting oxygen, on each side of the cutting line (A-B).

5. A method according to one of Claims 1 to 4, characterised in that the rate of flow of the fuel jet is comprised between 1 and 2 m³/hour.

6. A cutting nozzle (1) comprising at least two cutting oxygen conduits (31, 32; 62, 63; 95, 96) capable of connection to a first oxygen supply circuit (3; 75, 76) and opening out into a central portion of the nozzle through at least two cutting oxygen outlets (36, 37; 62, 67), a first conduit means (15, 21, 24; 80, 78, 79) for distributing fuel, capable of connection with a fuel supply circuit, a second conduit means (13, 18a; 77) for distributing heating oxygen capable of connection to a second oxygen supply circuit (4, 5; 77), and at least one series of conduits (40, 44; 64-66) for oxy-fuel mixture, each communicating with the first and second distributor conduit means and opening out into a peripheral portion of the nozzle through a series of oxy-fuel mixture outlets (41, 45; 97, 98), characterised in that it comprises at least one pure fuel conduit (47, 67) communicating solely with the first distributor conduit means and opening out into the central portion of the nozzle through at least one fuel outlet (46; 93, 94) located between two successive cutting oxygen outlets (36, 37; 62, 67).

7. A nozzle according to Claim 6, characterised in that the cutting oxygen outlets (36, 37; 62, 67) are aligned along a diameter (A-B) of the nozzle (1).

8. A nozzle according to Claim 7, characterised in that the fuel outlet (46) is aligned over said diameter.

9. A nozzle according to one of Claims 6 to 8, characterised in that two successive cutting oxygen outlets (36, 37; 62, 63; 95, 96) are 8 to 20 mm apart from each other.

10. A nozzle according to one of Claims 7 to 9, characterised in that it has a density of oxy-fuel mixture outlets (41, 45) which is higher in the vicinity of one end (B) of said diameter of the nozzle.

## Patentansprüche

1. Verfahren zum Sauerstoffschneiden von metallischen Werkstücken großer Dicke entlang einer Schneidlinie (A-B) mit den Schritten des Vorerwärmens des zu schneidenden Werkstückes, indem man eine Vielzahl von Erwärmungsflammen mit einer bezüglich der Schneidlinie im wesentlichen transversalen Ausdehnung wirken läßt, die mit einem mit Sauerstoff brennbarem Gemisch gespeist werden, und des Durchführens des Schnittes, indem man aufeinanderfolgend entlang der Schneidlinie mindestens zwei aufeinanderfolgende Schneidsauerstoffstrahlen einwirken läßt, einen ersten Schneidsauerstoffstrahl, der den Rohling eines Rohschnittes sicherstellt und einen zweiten Schneidsauerstoffstrahl, der in der Folge die Endbearbeitung des Schnittes sicherstellt, dadurch gekennzeichnet, daß es zwischen den ersten und zweiten Schneidsauerstoffstrahlen und gleichzeitig mit diesen den Schritt zum Ausstoßen mindestens eines Strahles aus reinem Brennstoff mit einem vorbestimmten Durchsatz aufweist, um eine Tiefenerwärmungszwischenflamme des rohen Schnittes zu bilden.

2. Verfahren nach Anspruch 1, dadurch gekennzeichnet, daß die Schneidsauerstoffstrahlen mit der Schneidlinie (A-B) ausgerichtet sind.

3. Verfahren nach Anspruch 2, dadurch gekennzeichnet, daß der Brennstoffstrahl mit den Schneidsauerstoffstrahlen ausgerichtet ist.

4. Verfahren nach einem der Ansprüche 1 bis 3, dadurch gekennzeichnet, daß es den Schritt aufweist, um gleichzeitig mit dem Schnitt durch die Schneidstrahlen eine Vielzahl von Erwärmungsflammen wirken zu lassen, die mit einem mit Sauerstoff brennbaren Gemisch gespeist sind, die außerhalb bezüglich der Schneidsauerstoffstrahlen auf beiden Seiten der Schneidlinie (A-B) angeordnet sind.

5. Verfahren nach einem der Ansprüche 1 bis 4, dadurch gekennzeichnet, daß der Durchsatz des Brennstoffstrahles zwischen 1 und 2 m³/h beträgt.

6. Schneiddüse (1) mit mindestens zwei Schneidsauerstoffleitungen (31, 32; 62, 63; 95, 96), die mit einem ersten Versorgungskreis für Sauerstoff (3; 75, 76) verbindbar sind und in einen zentralen Teil der Düse durch mindestens zwei Ausgänge (36, 37; 62, 67) für Schneidsauerstoff münden, wobei ein erstes Verteilerleitungsmittel (15, 21, 24; 80, 78, 79) für Brennstoff mit einem Brennstoffzuführkreis verbindbar ist, ein zweites Verteilerleitungsmittel (13, 18a; 77) für Erwärmungssauerstoff der mit einem zweiten Sauerstoffzuführkreis (4, 5; 77) verbindbar ist und mindestens eine Reihe von Leitungen (40, 44; 64-66) für mit Sauerstoff brennbares Gemisch jede mit ersten und zweiten Verteilerleitungsmitten in Verbindung steht und in einen Umfangsteil der Düse durch eine Reihe von Ausgängen (41, 45; 97, 98) für mit Sauerstoff brennbares Gemisch mündet, dadurch gekennzeichnet, daß sie mindestens eine Leitung (47, 67) für reinen Brennstoff aufweist, die nur mit dem ersten Verteilerleitungsmittel in Verbindung steht und in den zentralen Teil der Düse über mindestens einen Ausgang (46; 93, 94) für Brennstoff mündet, der zwischen zwei aufeinanderfolgenden Ausgängen (36, 37; 62, 67) für Schneidsauerstoff liegt.

7. Düse nach Anspruch 6, dadurch gekennzeichnet, daß die Ausgänge (36, 37; 62, 67) für Schneidsauerstoff einem Durchmesser (A-B) der Düse (1) folgend ausgerichtet sind.

8. Düse nach Anspruch 7, dadurch gekennzeichnet, daß der Ausgang (46) für Brennstoff auf den Durchmesser ausgerichtet ist.

9. Düse nach einem der Ansprüche 6 bis 8, dadurch gekennzeichnet, daß zwei aufeinanderfolgende Ausgänge (36, 37; 62, 63; 95, 96) für Schneidsauerstoff 8 bis 20 mm voneinander entfernt sind.

10. Düse nach einem der Ansprüche 7 bis 9, dadurch gekennzeichnet, daß sie eine Dichtigkeit an Ausgängen (41, 45) für mit Sauerstoff brennbares Gemisch aufweist, die in der Nachbarschaft eines Endes (B) des Durchmessers der Düse höher ist.
